# EUROPEAN PATENT APPLICATION

(11) **EP 4 666 835 A1**
(43) Date of publication of application: **24.12.2025**
(21) Application number: 24182710.4
(22) Date of filing: 17.06.2024
(51) Int. Cl.: A01D 61/00

(54) **A FEEDER ARRANGEMENT FOR A COMBINE HARVESTER**

(71) Applicant: CNH Industrial Belgium N.V., 8210 Zedelgem (BE)
(72) Inventor: Cordeiro Da Fonseca, Moisés, 8210 Zedelgem (BE); Declercq, Wim, 8210 Zedelgem (BE); Baes, Frederik, 8210 Zedelgem (BE)
(74) Representative: CNH Industrial IP Department

(57) **Abstract**

In a harvester of the invention, the feeder comprises a housing (10) and a conveyor assembly mounted in the housing, the conveyor assembly comprising moveable chains (14) guided by sprocket wheels (13). The sprocket wheels are mounted on a first and second rotatable shaft mounted respectively at the inlet and the outlet side of the feeder. Transversal crop transporting slats (15) are provided, each slat being attached to a first and a second chain at respective first and second locations along the slat's longitudinal direction. At least one of the transporting slats (15) is provided with first and second dirt removal openings (25) respectively at said first and second location. Preferably, the width of said openings as measured in the longitudinal direction of the slat is equal to or larger than the width of the teeth (26) of the sprocket wheels arranged for driving said first and second chain.

## Description

### Field of the Invention

The present invention is related to combine harvesters, in particular to an apparatus referred to as the feeder which transports the harvested crops from the combine header to the threshing rotors.

### State of the art.

Agricultural combine harvesters are machines designed for harvesting and processing crops such as wheat or corn. Crops are cut from the field on a wide area by a header mounted at the front of the combine. By an auger or a belt system mounted in the header, the harvested material is brought to a central area of the header, and from there it is transported by the feeder to a threshing mechanism comprising laterally or longitudinally mounted threshing rotors and further to the cleaning section comprising a number of sieves where grains are separated from any remaining crop residue.

The feeder typically comprises a set of chains or belts driven by sprocket wheels, and with transversal slats attached to the chains or belts. The crops are pressed between the moving slats and the floor of the feeder housing and transported in this way from the inlet of the feeder to the outlet, where the crops are fed to the threshing rotors of the combine.

As the slats move along their trajectory, they pass repeatedly across the teeth of the sprocket wheels. It is possible therefore that dirt accumulates in the areas between the teeth and the slats and becomes compacted in these areas. In particular, the accumulation of dirt can lead to 'chain jumping', as the teeth of the sprocket do not fully engage anymore with the chain, the chain might 'go over' one or more teeth of the sprocket and the chain might skip one or more teeth of the sprocket, resulting in the loss of synchronization between the chains and the sprockets, creating high forces in chains and sprockets, which can lead to premature wear and even failure of these components, and ultimately requiring considerable time and effort to re-synchronize the components and or repair/replace components. This might result in disruptions of the crop transport inside the feeder and/or downtime of the harvester, causing considerable loss of time and money.

### Summary of the invention

The present invention is related to harvester comprising a feeder apparatus, hereafter named 'feeder', as disclosed in the appended claims.

In a harvester according to the invention, the feeder comprises a housing and a conveyor assembly mounted in the housing, the conveyor assembly comprising moveable chains guided by sprocket wheels mounted at the inlet side and at the outlet side of the housing. The sprocket wheels are mounted on a first and second rotatable shaft mounted respectively at the inlet and the outlet side of the feeder. Transversal crop transporting slats are provided, each slat being attached to a first and a second chain at respective first and second locations along the slat's longitudinal direction. At least one of the transporting slats is provided with first and second dirt removal openings respectively at said first and second location. The openings are configured to become positioned above the teeth interlocking with chain links to which the slat is coupled, when said links interlock with the sprocket wheels. Preferably, the width of said openings as measured in the longitudinal direction of the slat is equal to or larger than the width of the teeth of the sprocket wheels arranged for driving said first and second chain.

The openings enable removing dirt from areas between the slats and the sprocket wheels, thereby avoiding dirt buildup and compactation in said areas, and solving the issues related to chain jumping.

### Brief description of the figures

Figure 1 is a schematic side view of a combine, indicating the position of the header and the feeder at the front of the machine.
Figure 2 is a 3D view of a feeder without the front face in accordance with an embodiment of the invention.
Figure 3 is a close-up view of the feeder's inlet side, visualizing slats in accordance with an embodiment of the invention.
Figures 4 and 5 shows details of a slat in accordance with the illustrated embodiment.
Figure 6 shows a cross-section of one of the slats, through an aperture in the slat.
Figure 7 illustrates a preferred mounting position of the slats.

### Detailed description of preferred embodiments of the invention

Preferred embodiments will now be described with reference to the drawings. The detailed description is not limiting the scope of the invention, which is defined only by the appended claims.

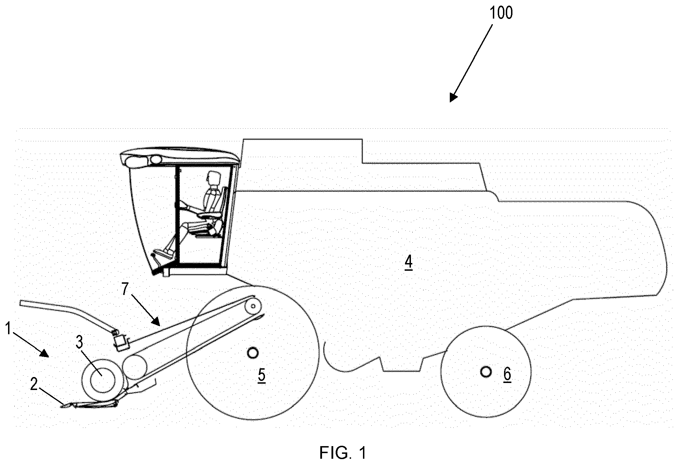

Figure 1 shows a side view of a combine harvester 100, comprising a header 1 mounted at the front of the combine. The header comprises knives 2 maintained at a given height above ground level while the combine moves through a field of crops that are to be harvested. Cut crops are transported from both lateral sides of the header 1 towards a central area by an auger 3. The main body 4 of the combine is supported by front and rear wheels 5 and 6 and comprises the threshing rotors and cleaning section generally known by the skilled reader and not depicted as such in Figure 1. From the central area of the header 1, crops are transported into the main body 4 of the combine by a feeder 7. The feeder 7 is inclined upwards from the header 1 towards the main body 4.

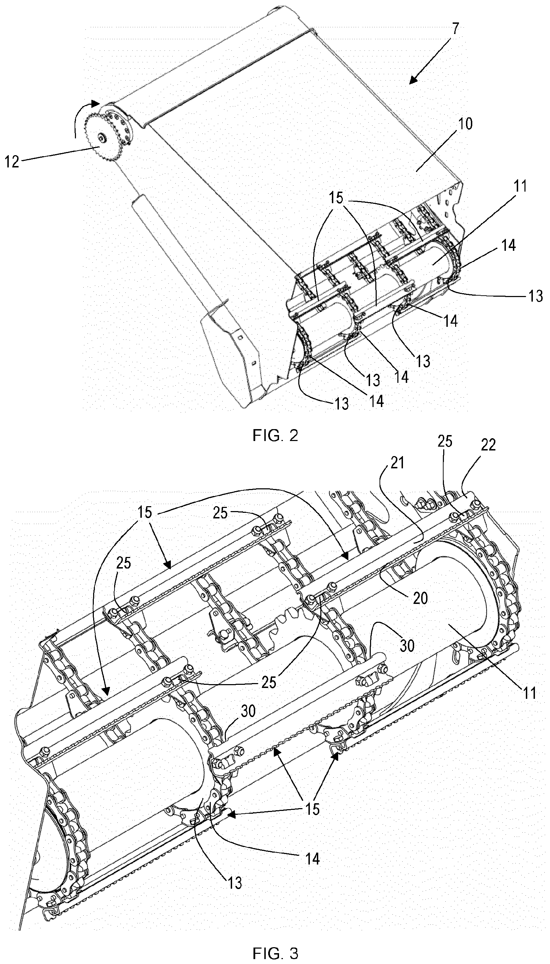

Figure 2 shows a perspective view of the feeder 7 according to an embodiment of the invention. The feeder comprises a feeder housing 10 and a conveyor assembly mounted inside the housing. The front wall of the housing 10 is not shown, in order to visualize a front portion of the conveyor assembly. Said front wall is configured to receive the header attached thereto.

The conveyor assembly comprises a first rotatable shaft 11 at the inlet side of the feeder housing and a second rotatable shaft at the outlet side of the feeder housing. The second shaft is not visible in the drawing as it is covered by the housing 10. The second rotatable shaft is attached to a drive axle 12 coupled to a drive mechanism (not shown) for actuating the conveyor assembly's operation. Four wheels 13 are attached to the first shaft 11. At corresponding positions along the longitudinal direction of the second shaft, four more sprocket wheels are mounted, so as to drive the movement of four parallel chains 14, each chain interlocking with the teeth of a first sprocket wheel 14 on the first shaft 11 and of a second sprocket wheel on the second shaft. According to preferred embodiments, at least three sprocket wheels are mounted on each of the first and second rotatable shaft, depending on the combine size.

The rotation of the drive axle 12 in the direction indicated by the arrow actuates the movement of the chains 14 in the direction of the header along the upper area of the conveyor assembly, and the reverse movement of the chains along the bottom area of the conveyor assembly. Transversal slats 15 are attached to the chains at regular distances, and serve to drag a mat of crops along the feeder floor, from the inlet side of the feeder towards the outlet side. The slats 15 are transversal in the sense that they are oriented transversely relative to the chains 14.

A more detailed view of the slats 15 is shown in Figure 3. The slats are realised as longitudinal profiles preferably formed of metal and comprising an upstanding and serrated front edge 20, a planar middle section 21 and a curved rear edge 22. The terms 'front and rear edge' of the slats are defined with respect to the operational direction of movement of the chains 14, i.e. the direction applied when crops are being transported from the inlet side of the feeder to the outlet side. When the chains move in the operational direction (as indicated by the arrow in Figure 2), the front edge of the slat 15 is defined as the leading edge of the slat and the rear edge is the trailing edge.

The particular illustrated slat profile including the serrated front edge 20 and the curved rear edge 22 is merely an example of a profile to which the invention is applicable, and therefore this profile does not limit the scope of the invention. The slats are however preferably provided with at least an upstanding front edge (not necessarily serrated) for exerting a grip on the transported crops.

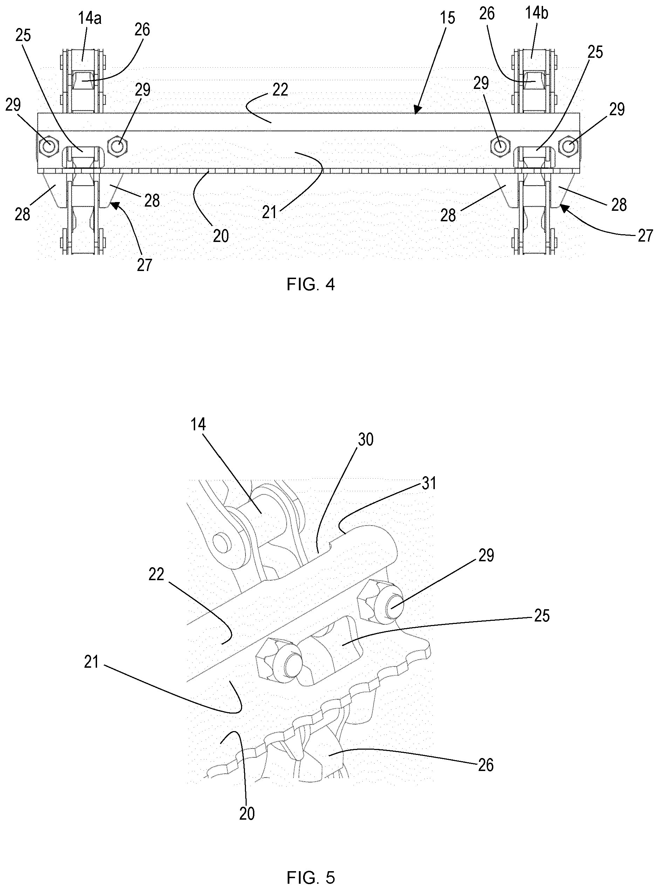

Reference is made to Figures 4 to 7 for a number of details described hereafter with respect to a single slat 15 in a feeder according to the illustrated embodiment. As seen in the images, cut-out openings 25 are provided in the slat 15, at the two locations where the slat is coupled to links of a respective first and second chain 14a and 14b. In particular, the openings 25 are configured to become positioned above the sprocket teeth 26 interlocking with said links to which the slat is coupled, when said links interlock with the sprocket wheels driving the first and second chain. The openings 25 become positioned 'above' said teeth from the viewpoint of the rotation axis of the sprocket wheels. Another way of defining this aspect is by saying that the openings 25 are at least partially overlapping the transversal width of the teeth (width measured in the longitudinal slat direction), or at least partially exposing said transversal width of the teeth, as the slat moves along the circumference of the sprocket wheels. As illustrated, and viewed in the longitudinal slat direction, the openings 25 are preferably wider than the teeth 26 and preferably arranged symmetrically with respect to the centre of the teeth 26 as they pass across said teeth.

With a reference to their function, the openings 25 may be referred to as dirt removal openings. The openings 25 enable removal of dirt from the areas between the sprocket wheel teeth 26 and the slats 15, by allowing the teeth 26 to push dirt out through the openings 25, thereby realizing a self-cleaning effect and avoid dirt buildup and compactation in said areas. The illustrated embodiment includes one particular configuration in terms of the shape and position of the dirt removal openings 25 in combination with the illustrated slat profile, which will be described hereafter in some detail. The invention is however not limited to this embodiment.

In a manner known as such, the slat 15 is attached to the chains 14a, 14b through support brackets 27 which are coupled to the chain links. The support brackets comprise platform portions 28 provided with holes. The planar mid-section 21 of the slat 15 comprises corresponding holes, enabling to attach the slat to the platform portions 28 of the brackets 27 via bolt connections 29. The dirt removal openings 25 are located between said bolt connections 29 of the support brackets 27 coupled to the respective chains 14a and 14b. The width of the openings 25 as measured in the longitudinal direction of the slat 15 exceeds the width of the teeth 26 of the sprocket wheels. Preferably, and as shown in the drawings, the width of the openings 25 slightly exceeds the distance between the bracket's platform portions 28, so that this full distance between said platform portions 28 is revealed through the cut-out openings 25.

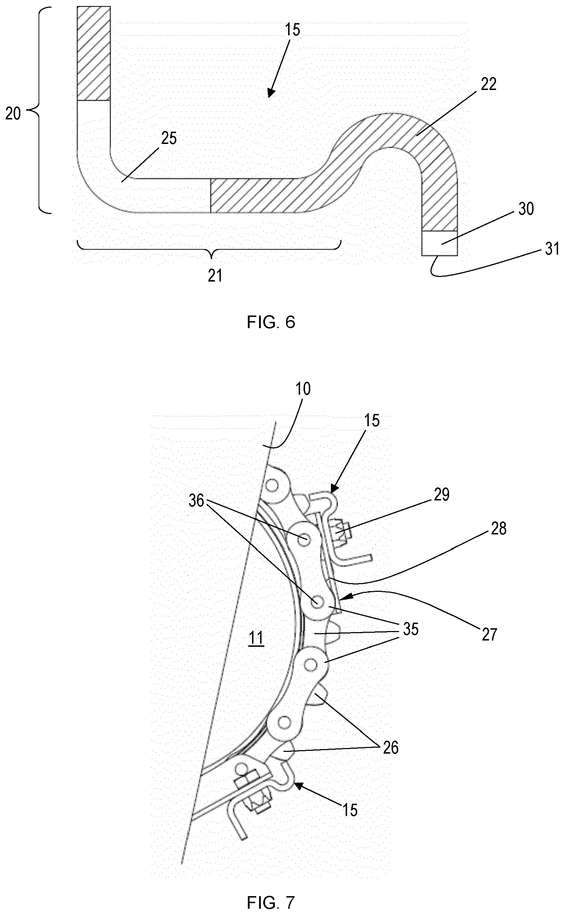

As best visible in the cross-section of the slat 15 presented in Figure 6, in the direction perpendicular to the slat's longitudinal direction, the dirt removal openings 25 extend from the planar mid section 21 of the profile to the upstanding edge 20, i.e. the openings 25 are overlapping both said planar mid section 21 and said upstanding edge 20. This particular arrangement of the openings 25 with respect to the cross-section of the slat profile is preferred in terms of optimizing the above-described functionality of the opening, i.e. to enable the removal of dirt through the openings 25. As stated, the illustrated embodiment is however not limiting the broader scope of the invention, which includes any embodiment of a feeder comprising one or more slats provided with openings which enable the above-described functionality.

In Figures 3, 5 and 6, it is seen that two cut-outs 30 are provided in the rear rim 31 of the curved rear edge 22 of the slats. As best seen in Figure 6, the rear edge 22 curves upward from the planar mid section 21 and downward again toward the rear rim 31. The cut-outs 30 are aligned to the respective dirt removal opening 25, in a direction perpendicular to the slat's longitudinal direction. The width of the cut-outs 30 is higher than the width of the sprocket teeth 26. These cut-outs 30 increase the distance between the rim 31 and the sprocket teeth 26, when the slat is situated above said teeth, thereby further reducing the probability that dirt becomes trapped and compacted between the slats and the teeth.

Figure 7 illustrates the preferred position of the slats 15 in the longitudinal direction of chains 14. One chain 14 is shown in a side view of the front drum 11 extending out of the feeder housing 10. The chain links 35 of the chain 14 are coupled to each other by chain pins 36 as generally known in the art. It is seen that the platform portions 28 of the support bracket 27 are coupled to two consecutive chain pins 36 and that the slat 15 is essentially aligned to one of those two consecutive pins 36, i.e. the longitudinal centre line of the slat coincides with or is situated in close proximity to one of said pins 36. In the embodiment shown, this centre line is he centre line of the planar mid section 21. In this position, the slat 15 is not covering the gap between said two consecutive chain pins 36. This position of the slat aligned to one of the chain pins, although it is not limiting the scope of the present invention, is a preferred slat position, as it further optimizes the effect of the dirt removal openings 25, especially in combination with the specific arrangement of the dirt removal openings shown in Figure 6, i.e. extending from the mid section 21 of the slat to the upstanding front edge 20.

## Claims

1. A combine harvester (100) comprising a feeder apparatus (7) for transporting crops from a combine header (1) towards a threshing and cleaning installation (4) of the combine harvester, the feeder apparatus comprising a feeder housing (10) having an inlet side and an outlet side, and a conveyor assembly mounted in the housing, the conveyor assembly comprising :
- a first rotatable shaft (11) at the inlet side of the housing and a second rotatable shaft at the outlet side of the housing,
- a plurality of first sprocket wheels (13) attached to the first shaft (11) and a corresponding plurality of second sprocket wheels attached to the second shaft, each sprocket wheel comprising a set of teeth (26) distributed along the circumference of the sprocket wheel,
- a plurality of chains (14), each chain comprising links (35) which interlock with the teeth (26) of one of the first sprocket wheels (13) and of a corresponding one of the second sprocket wheels, so that a rotation of the first shaft (11) drives a movement of the chains (14),
- crop transporting slats (15) arranged transversely relative to the chains (14), wherein each slat is coupled to links (35) of a first and a second chain (14a, 14b) at respective first and second locations along the slat's longitudinal direction, so that the slats move together with said first and second chain when the shafts are rotating,
**characterized in that** at least one of the crop transporting slats (15) is provided with first and second dirt removal openings (25) respectively at said first and second location, wherein said openings (25) are configured to become positioned above the teeth (26) interlocking with said links (35) to which the slat is coupled, when said links interlock with the sprocket wheels.

2. The harvester according to claim 1, wherein the width of the dirt removal openings (25), as measured in the longitudinal direction of the slat (15), is equal to or larger than the width of the teeth (26) of the sprocket wheels.

3. The harvester according to claim 2, wherein said width of the dirt removal openings (25) fully overlaps the width of the teeth (26).

4. The harvester according to any one of claims 1 to 3, wherein said at least one slat (15) comprises a planar mid section (21) and an upstanding front edge (20), and wherein, in the direction perpendicular to said longitudinal slat direction, the dirt removal openings (25) overlap both the mid section and the upstanding front edge of the slat.

5. The harvester according to any one of the preceding claims, wherein said at least one slat (15) comprises a planar mid section (21) and a curved rear edge (22) that curves upwards from the planar mid section (21) and subsequently downward towards a rear rim (31) of the slat, and wherein said rear rim comprises a pair of cut-outs (30) aligned respectively to the pair of dirt removal openings (25).

6. The harvester according to claim 5, wherein the width of the cut-outs (30) in the longitudinal direction of the slat (15) is larger than the width of the teeth (26) of the sprocket wheels.

7. The harvester according to any one of the preceding claims, wherein the links (35) of the chains (14) are coupled together by chain pins (36), and wherein the longitudinal centre line of said at least one slat (15) is essentially aligned to chain pins (36) of said first and second chain (14a, 14b).

8. The harvester according to any one of the preceding claims, wherein said at least one slat (15) is attached to the first and second chain (14a,14b) by a respective first and second support bracket (27), said brackets being coupled to respective links of the first and second chain, said brackets comprising platform portions (28) arranged on opposite sides of said links, wherein the slat is attached to said platform portions, and wherein the width of the dirt removal openings (25) as measured in the longitudinal direction of the slat exceeds the distance between said platform portions (28).

9. The harvester according to any one of the preceding claims, wherein the conveyor assembly comprises at least three first sprocket wheels (13) attached to the first shaft (11) and at least three second sprocket wheels attached to the second shaft.
